# EUROPÄISCHE PATENTSCHRIFT

(11) **EP 1 570 256 B1**
(45) Veröffentlichungstag und Bekanntmachung des Hinweises auf die Patenterteilung: **05.07.2006**
(21) Anmeldenummer: 03789220.5
(22) Anmeldetag: 10.12.2003
(51) Int. Cl.: G01N 21/90

(54) **VORRICHTUNG ZUM INSPIZIEREN VON GEFÜLLTEN UND VERSCHLOSSENEN GEFÄSSEN**
DEVICE FOR INSPECTING FILLED AND CLOSED RECEPTACLES
DISPOSITIF PERMETTANT D'INSPECTER DES RÉCIPIENTS FERMÉS ET REMPLIS

(30) Priorität: 10.12.2002 DE 10257749
(43) Veröffentlichungstag der Anmeldung: 07.09.2005
(73) Patentinhaber: KRONES AG, 93068 Neutraubling (DE)
(72) Erfinder: NIEDERMEIER, Anton, 93326 Offenstetten (DE); EDERER, Roland, 93086 Wörth/Donau (DE); FIEGLER, Rudolf, 93053 Regensburg (DE)
(86) Internationale Anmeldenummer: PCT/EP2003/014062
(87) Internationale Veröffentlichungsnummer: WO 2004/053471

(56) Entgegenhaltungen:
- EP-A- 0 726 216
- EP-A- 0 743 267
- EP-A- 1 203 946
- WO-A-94/08230
- DE-A- 10 133 104
- DE-U- 9 401 926
- JP-A- 51 020 897
- US-A- 3 811 567
- US-A- 3 900 266
- US-A- 5 719 679

## Beschreibung

Die Erfindung betrifft eine Vorrichtung zum Inspizieren von gefüllten und verschlossenen Gefäßen gemäß dem Oberbegriff des Anspruchs 1.

Aus WO 94/08230 ist ein Verfahren und eine Vorrichtung zum Inspizieren transparenter Gefäße und ihrer flüssigen Inhalte bekannt. Die offenbarte Vorrichtung besitzt zwei kontinuierlich antreibbare Karussells, die von den zu prüfenden Gefäßen, z. B. gefüllte Getränkeflaschen, nacheinander durchlaufen werden. In dem in Transportrichtung gesehen ersten Karussell werden die Gefäße zunächst mit geringer Drehgeschwindigkeit einmal vollständig um ihre Hochachse gedreht und dabei die Seitenwand von einer Kamera zur Erkennung von Beschädigungen oder sonstigen Defekten am Behälter selbst betrachtet. Im Anschluss daran wird die Drehgeschwindigkeit zunächst erhöht, um die Flüssigkeit in Rotation zu versetzen, mit dem ziel, eventuell vorhandene Fremdkörper vom Boden aufzuwirbeln. Noch vor dem verlassen des ersten Karussells wird die Drehbewegung der Gefäße gestoppt, um sie anschließend über ein erstes Sternrad, eine. Teilungsverzugsschnecke und ein zweites Sternrad dem zweiten Karussell zu übergeben, in dem die Gefäße ohne eine Eigendrehung um ihre vertikale Achse von mitlaufenden Kameras zur Erkennung von Fremdkörpern im Füllgut (Schwebstoffe, Splitter oder dgl.) sowohl im Hellfeld- als auch im Dunkelfeldverfahren inspiziert werden.

Nachteiligerweise ist im ersten Karussell für jedes Gefäß ein eigener, unabhängig steuerbarer elektromotorischer Antrieb vorgesehen, was einen sehr hohen antriebstechnischen Aufwand darstellt.

Ungünstig ist ferner der Umstand, dass die Übergabestrecke vom ersten zum zweiten Karussell durch die Verwendung der zwei Transfersternräder und der dazwischen geschalteten Schnecke sehr lang ausfällt, wodurch eine verhältnismäßig starke Abbremsung der rotierenden Flüssigkeit in den Gefäßen noch vor dem Erreichen des zweiten Karussells, in dem dann ja erst die eigentliche Fremdkörpererkennung in der Flüssigkeit erfolgt, eintritt. Bei geringen Durchlaufgeschwindigkeiten und/oder schweren Fremdkörpern, insbesondere transparenten Körpern, die nur in Bewegung zuverlässig erkennbar sind, ist die Inspektionssicherheit mangelhaft.

Darüber hinaus sind die erwähnten, für den Zwischentransfer erforderlichen Transportelemente vom Format der zu prüfenden Gefäße abhängig und müssen daher bei jeder Umstellung der Inspektionsmaschine auf eine andere Gefäßsorte gewechselt werden. Dies gilt im Übrigen auch für das Einlaufsternrad des ersten Karussells und das Auslaufsternrad des zweiten Karussells. Ferner sind auch die zwischen den Sternrädern angeordneten Führungsbogen formatabhängige Wechselteile.

Wegen des großen Mittenabstandes der beiden Karussells baut die bekannte Inspektionsmaschine zudem verhältnismäßig raumgreifend.

Ausgehend von diesem Stand der Technik liegt der Erfindung die Aufgabe zugrunde, eine Vorrichtung zum Inspizieren von gefüllten und verschlossenen Gefäßen anzugeben, die bei geringerem Aufwand, einen kompakten Aufbau mit erhöhter Erkennungssicherheit ermöglicht.

Gelöst wird diese Aufgabe durch die kennzeichnenden Merkmale des Anspruchs 1.

Durch die sich tangierende Anordnung der Karussells ist eine unmittelbare Übergabe der Gefäße vom ersten auf das zweite Karussell ohne Umwege möglich, wodurch nicht nur formatabhänge Transferelemente wegfallen, sondern des weiteren die Gefäße unmittelbar nach der Drehbeschleunigung ihres flüssigen Inhalts ohne nennenswerten Zeitverlust sofort auf eventuell in der Flüssigkeit vorhandene Fremdkörper untersucht werden können, so dass selbst verhältnismäßig schwere, lichtstreuende Fremdkörper auch bei geringen Durchlaufgeschwindigkeiten noch vor Absinken auf den Gefäßboden in Bewegung zuverlässig erfassbar sind.

Weitere vorteilhafte Ausgestaltungen der Erfindung sind Gegenstand der verbleibenden Unteransprüche.

Nachfolgend wird ein bevorzugtes Ausführungsbeispiel anhand der Figuren erläutert. Es zeigt:
- Figur 1: eine Inspektionsmaschine in einer stark schematisierten Draufsicht und
- Figur 2: einen vertikalen Teilschnitt durch den äußeren Umfangsbereich eines ersten Karussells der Inspektionsmaschine in Figur 1.

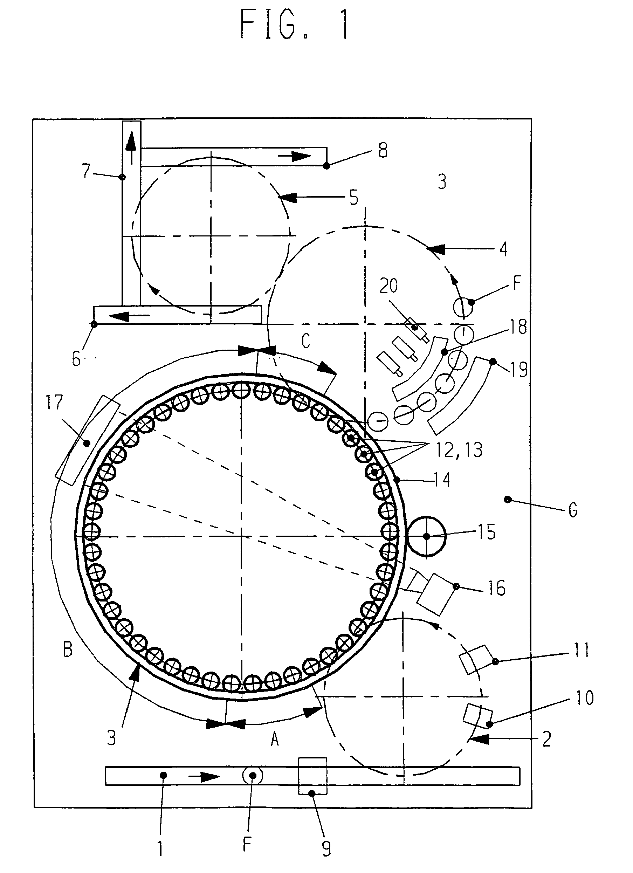

Die in Figur 1 schematisch dargestellte Inspektionsmaschine ist speziell zum Inspizieren von gefüllten und verschlossenen Getränkeflaschen aus transparentem oder semitransparentem Material eingerichtet. Die zu überprüfenden Flaschen F werden beispielsweise von einer vorgeordneten Flaschenfüll- und Verschließmaschine über ein Einlaufförderband 1 kontinuierlich einem Einlaufsternrad 2 zugeführt, wobei sie spätestens vor der Übernahme durch das Einlaufsternrad 2 eine stationär angeordnete Einlaufkontrolle 9 passieren, die das Vorhandensein eines Verschlusses und ggf. auch die Füllhöhe überprüft. Zur Vermeidung von Verschmutzungen der Inspektionseinheiten durch überschwappende Flüssigkeit aus unverschlossenen Flaschen werden diese vom Einlaufsternrad 2 nicht erfasst und passieren es in tangentialer Richtung in Richtung einer nachgeordneten Sammelstelle. In gleicher Weise wird auch mit über- oder unterfüllten Flaschen verfahren.

Das gegen den Uhrzeigersinn kontinuierlich antreibbare Einlaufsternrad 2 besitzt an seiner Peripherie eine Vielzahl von mit gleichmäßigem Maschinenteilungsabstand angeordnete, selektiv ansteuerbare, an unterschiedliche Flaschendurchmesser anpaßbare Greifklammern zum Erfassen der Flaschen am Rumpf- und ggf. auch Kopf- bzw. Halsbereich. Während dem Transfer vom Einlaufförderband 1 zu einem in Umlaufrichtung folgenden ersten Karussell 3 werden die Flaschen bodenfrei zunächst über eine stationäre Bodenabblaseinrichtung 10 zum Entfernen von Seifenschaum oder dgl., sowie eine danach angeordnete, im Hellfeldverfahren betreibbare Bodenkontrollstation 11 zum Erkennen von Verschmutzungen oder Schäden am Flaschenboden selbst, sowie auch schweren, durch Drehen der Flasche nicht aufwirbelbaren Fremdkörpern hinwegbewegt.

Das Einlaufsternrad 2 kann beispielsweise entsprechend den europäischen Patenten 0 726 216 B1, 0 743 267 B1, die Bodenabblaseinrichtung 10 entsprechend dem deutschen Gebrauchsmuster 94 01 926 U1 und die Bodenkontrollstation 11 entsprechend der deutschen Patentanmeldung 101 33 104 ausgebildet sein.

Im Berührpunkt der Teilkreise des Einlaufsternrads 2 und des ersten, im Uhrzeigersinn umlaufenden Karussells 3 werden die Flaschen F mit ihrer Bodenfläche auf um eine vertikale Achse im Karussell drehbar gelagerte Drehteller 12 übergeben und in einer axialen Einspannung drehbar gehalten, so wie das an sich aus dem gattungsbildenen Stand der Technik bekannt ist. Im weiteren Verlauf werden die auf den Drehtellern 12 aufrechtstehenden Flaschen zunächst beim Passieren des ersten Umlaufsektors A des Karussells 3 um ihre Hochachse kontinuierlich beschleunigt in Drehung versetzt, um anschließend den Umlaufsektor B mit einer definierten Höchstdrehzahl zu durchfahren, auf den ein Umlaufsektor C zum kontinuierlichen Abbremsen der Flaschendrehung annähernd bis zum Stillstand folgt.

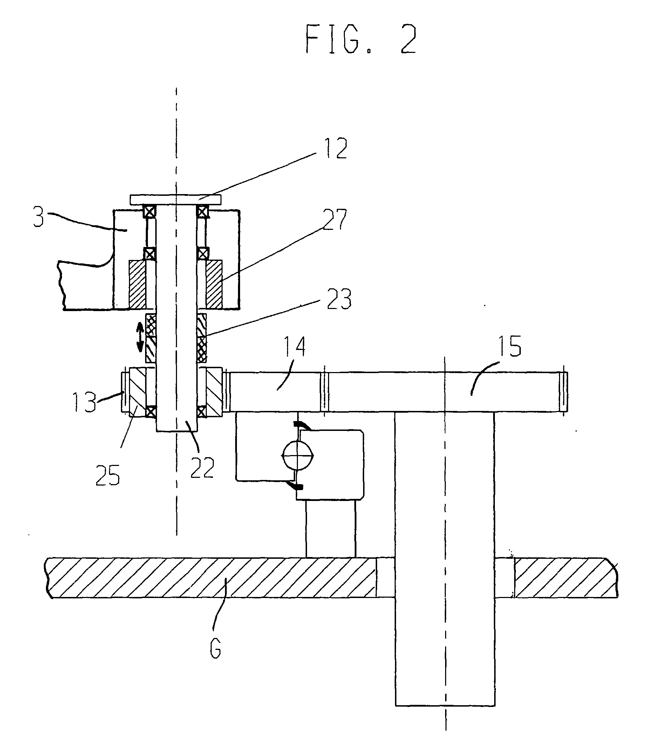

Zum Erzeugen der genannten Drehbewegungen der Drehteller 12 weist jeder Drehteller ein unten liegendes, auf seiner Welle 22 frei drehbar gelagertes Ritzel 13 auf, das mit der Innenverzahnung eines eine Innen- und Außenverzahnung aufweisenden Zahnkranzes 14 kämmt, der sich über eine mittenfreie Kugeldrehverbindung auf der Gestellplatte G der Maschine abstützt. Dieser Zahnkranz 14 ist durch ein in seine Außenverzahnung eingreifendes Antriebszahnrad 15 gesteuert von einem drehzahlveränderbaren Antrieb (Elektromotor oder dgl.) dem Uhrzeigersinn entgegengerichtet gegensinnig zum Karussell 3 antreibbar. Dieser Gegenlauf ermöglicht eine ausreichend hohe Rotation der Drehteller. Über nachfolgend noch in Verbindung mit der Fig. 2 genauer beschriebene steuerbare Magnetkupplungen sind die Wellen 22 beim Durchfahren der o.g. Umlaufsektoren A, B, C das übertragbare Drehmoment betreffend mehr oder weniger stark mit ihrem zugeordneten Ritzel 13 und im verbleibenden Umlaufsektor des Karussells 3 mit diesem selbst kuppelbar.

An der Peripherie des ersten Karussells 3 befindet sich wenigstens eine Seitenwandkamera 16 und diametral gegenüberliegend an der äußeren Seite des Karussells 3 ein Seitenwandleuchtschirm 17. Bei dieser Anordnung handelt es sich um eine Hellfeldinspektion im Durchlicht, mit der Abdunkelungen hervorrufende Beschädigungen bzw. Verschmutzungen oder durch die rotierende Flüssigkeitsbewegung in den Flaschen aufgewirbelte lichtundurchlässige Schwebstoffe oder dgl. erkennbar sind.

Den Endbereich des Drehsektors C des ersten Karussells 3 tangiert ein zweites Karussell 4, das - in gleicher weise wie das Einlaufsternrad 2 - an seiner Peripherie eine Vielzahl von mit dem Maschinenteilungsabstand versetzt angeordnete, selektiv steuerbare Greifzangen zum Erfassen der Flaschen an ihrem Rumpf- und ggf. auch Kopf- bzw. Halsbereich aufweist. Damit können die Flaschen F im gemeinsamen Beruhrpunkt zum ersten Karussell 3 erfasst und bodenfrei gegen den Uhrzeigersinn in Richtung zu einem darauffolgenden Sortiersternrad 5 transferiert werden, wobei während dem Weg dorthin die Flaschen einer Fremdkörpererkennung im Dunkelfeldverfahren unterzogen werden, mit der lichtstreuende Fremdkörper, insbesondere transparente Glassplitter, erkennbar sind.

Zu diesem Zweck sind beiderseits der gekrümmten Umlaufbahn der Flaschen F an die Bahnkrümmung angepasste, äquidistante Leuchtschirme 18 und 19 stationär angeordnet, zwischen denen die Flaschen frei durchlaufen können und dabei seitlich möglichst großflächig beleuchtet werden. Durch die gleichzeitig erfolgende beidseitige, tunnelartige Beleuchtung ist eine sehr hohe Lichteinleitung in die Flaschen erreichbar, die insbesondere bei trüben oder dunklen Flüssigkeiten, wie z.B. hefehaltigem Bier oder Cola, von Vorteil ist. Die Leuchtschirme 18 und 19 können bevorzugt mit einer Vielzahl von LEDs bestückt sein, die durch eine Beleuchtungssteuerung gepulst betreibbar sind.

Ferner ist das zweite Karussell 4 mit unterhalb seiner nicht dargestellten Greifzangen angeordneten Kameras 20 bestückt, beispielsweise jeweils einer Kamera pro Greifzange, die gemeinsam mit den Greifzangen stellungssynchron umlaufen und den Boden der beleuchteten Flaschen, ggf. über darunter schräg positionierte, nicht gezeigte Umlenkspiegel abbilden können. Mit dieser Anordnung wird eine Dunkelfeldbeleuchtung realisiert, in der lichtstreuende Fehler bzw. Fremdkörper in einer ansonsten dunklen Abbildung als helle Punkte oder Zonen aufscheinen.

Alternativ wäre auch eine stationäre Anordnung einer oder mehrerer Kameras denkbar. Durch eine gleichzeitige Ansteuerung der Kameras 20 zur Bildaufnahme sowie der LEDs der Leuchtschirme 18 und 19 kann vorteilhafterweise eine sonst erforderliche Triggerung entfallen. Außerdem ist eine Abwandlung möglich, bei der über eine entsprechend angepaßte Spiegelanordnung eine Kamera immer mehrere Flaschenböden gleichzeitig erfassen und abbilden kann.

Das ebenfalls mit selektiv steuerbaren, nicht dargestellten Greifzangen ausgestattete Sortiersternrad 5 ist in der Lage, die inspizierten Flaschen in Abhängigkeit der Prüfergebnisse der Bodenkontrollstation 11, der Seitenwandkamera 16 und der die Flaschen F durch den Boden betrachtenden Kameras 20 auf verschiedene Förderbänder abzugeben. So können beispielsweise die unbeanstandeten Flaschen die Inspektionsmaschine über das mit 6 bezeichnete Auslaufförderband verlassen, während Fehler aufweisende Flaschen in Abhängigkeit des erkannten Fehlers wahlweise auf die Ausschleusbänder 7 oder 8 ausleitbar sind.

Aus der Fig. 2 ist der Antrieb der auf dem ersten Karussell 3 angeordneten Drehteller 12 im Detail erkennbar. Die Drehteller 12 sind jeweils am oberen Ende von auf einem gemeinsamen Teilkreis vertikal im Karussell 3 drehbar gelagerten Wellen 22 verdrehfest angeordnet. Auf jeder Welle 22 ist ein axial auf und ab verschiebbar geführter Magnetring 23 geführt, der mit seiner Welle 22 zur Drehmomentübertragung verdrehfest in Eingriff steht. Ferner ist koaxial zu jeder Welle 22 im Karussell 3 jeweils ein Hysteresering 27 verdrehfest angeordnet, dessen Innendurchmesser geringfügig größer ist als der Aussendurchmesser des Magnetrings 23. Mit axialem Abstand unterhalb des genannten ersten Hystereserings 27 ist in jedem der mit dem Zahnkranz 14 in Eingriff stehenden Ritzel 13 verdrehfest ein zweiter, einen den Aussendurchmesser des Magnetrings 23 ebenfalls geringfügig übersteigenden Innendurchmesser aufweisender Hysteresering 25 frei drehbar koaxial auf der Welle 22 gelagert. Der axiale Abstand der beiden Hystereseringe 25 und 27 entspricht annähernd der Höhe des Magnetrings 23, der zumindest an seinem oberen und unteren Rand umfänglich versetzt mit mehreren abwechselnd gegensätzlich gepolten Permanentmagneten bestückt ist. Die Hystereseringe bestehen aus einem Material hoher Permeabilität, z.B. Weicheisen.

Jeder der Magnetringe 23 ist durch eine nicht näher dargestellte Betätigungseinrichtung, z.B. mechanische Kurvensteuerung, längs entlang der Welle 22 auf- und abverschiebbar und kann dadurch wahlweise mit dem antreibbaren untenliegenden Hysteresering 25 oder dem oberen verdrehfesten Hysteresering 27 eine Magnetkupplung bilden, wobei das übertragbare Drehmoment über die Eintauchtiefe, d.h. die axiale Überdeckung des Magnetrings 23 mit dem jeweils zugeordneten Hysteresering veränderbar ist. Die regulierbare Überdeckung ermöglicht eine einfache Steuerung der auf eine Flasche F übertragbaren Beschleunigungs- bzw.

Bremsmomente in den einzelnen Umlaufsektoren des Karussells 3. Auf diese Weise kann jeder Drehteller 12 für sich unabhängig von den benachbarten Drehtellern ohne jeden elektrotechnischen Aufwand während eines Umlaufs mit dem Karussell zur momentanen Umlaufposition stellungsgerecht praktisch verschleißfrei bremsend oder beschleunigend drehmomentbeaufschlagt werden.

Einzelne elektromotorische Antriebe für jeden Drehteller sind daher entbehrlich. Der Antrieb aller Drehteller 12 kann auf einfache Weise über den Zahnkranz 14 und das Antriebszahnrad 15 allein vom zentralen Maschinenantrieb abgeleitet werden, so dass automatisch auch eine Geschwindigkeits- und Drehstellungssyrichronisierung zu allen übrigen Bewegungsabläufen der Inspektionsmaschine gewährleistet ist.

Davon abweichend ist aber auch ein eigener, vom Maschinenantrieb unabhängiger, drehzahlveränderlicher motorischer Antrieb einsetzbar, der das Antriebsrad 15 beaufschlagt.

## Patentansprüche

1. Vorrichtung zum Inspizieren von gefüllten und verschlossenen Gefäßen bestehend aus einem Karussell (3) mit Antriebselementen (14, 15) zur Drehung der Gefäße um ihre Längsachse in dem die zu prüfenden Gefäße (F) derart um ihre Längsachse, in Drehung versetzbar sind, dass das Füllgut in den Gefäßen ausreichend schnell zu rotieren beginnt, um evtl. vorhandene Fremdkörper vom Gefäßboden aufzuwirbeln, und einem in Transportrichtung nachfolgenden zweiten Karussell (4) zum bodenfreien Gefäßtransport, dem wenigstens eine im Dunkelfeldverfahren arbeitende Inspektionseinrichtung (20) zur Erkennung lichtstreuender Fremdkörper im Füllgut zugeordnet ist, **dadurch gekennzeichnet, dass** beide Karussells (3,4) mit ihren Teilkreisen tangierend so nebeneinander angeordnet sind, dass die Gefäße (F) aus dem ersten Karussell (3) unmittelbar in das zweite Karussell (4) überführbar sind.

2. Vorrichtung nach Anspruch 1, **dadurch gekennzeichnet, dass** dem ersten Karussell (3) in Transportrichtung gesehen ein die Gefäße bodenfrei transportierendes Sternrad (2) vorgeordnet ist, dem wenigstens eine Bodenabblaseinrichtung (10) und/oder eine im Hellfeldverfahren arbeitende Bodenkontrollstation (11) zugeordnet ist.

3. Vorrichtung nach Anspruch 1 oder 2, **dadurch gekennzeichnet, dass** dem Sternrad (2) und/oder dem ersten Karussell (3) eine Einlaufkontrolle (9) zur Überprüfung der Füllstände und/oder der Gefäßverschlüsse vorgeordnet ist.

4. Vorrichtung nach Anspruch 3, **dadurch gekennzeichnet, dass** unverschlossene Gefäße weder vom Sternrad (2) noch dem ersten Karussell (3) übernommen werden.

5. Vorrichtung nach wenigstens einem der Ansprüche 1 bis 4, **dadurch gekennzeichnet, dass** das erste Karussell (3) auf einem Teilkreis mehrere antreibbare Drehteller (12) aufweist, die über steuerbare Magnetkupplungen (23,27) mit einem für alle Drehteller gemeinsamen Antriebselement (14,15) kraftschlüssig in oder außer Eingriff bringbar sind.

6. Vorrichtung nach Anspruch 5, **dadurch gekennzeichnet, dass** die Magnetkupplungen (23,27) drehmomentveränderbare Hysteresekupplungen sind.

7. Vorrichtung nach wenigstens einem der vorhergehenden Ansprüche 1 bis 6, **dadurch gekennzeichnet, dass** wenigstens abschnittsweise beiderseits der Umlaufbahn des zweiten Karussells (4) einander diametral gegenüberliegende, an die Bahnkrümmung äquidistant angepaßte Leuchtschirme (18,19) vorhanden sind, die die Gefäße (F) während einer Aufnahme des Bodens gleichzeitig seitlich beleuchten

8. Vorrichtung nach Anspruch 7, **dadurch gekennzeichnet, dass** die Leuchtschirme (18,19) mit gepulst ansteuerbaren LBDs bestückt sind, die immer gleichzeitig mit einer Bodenaufnahme ansteuerbar sind.

## Claims

1. An apparatus for inspecting filled and sealed containers, said apparatus comprising a carousel (3) with driving elements (14, 15) for rotating containers about their longitudinal axes, the containers (F) to be inspected being set rotating about their longitudinal axes in such a way that the liquid held in said containers begins to move round at a speed which is sufficient to whirl up any foreign bodies from the bottom of the container, as well comprising a second carousel (4), following on in direction of transport, for the transportation of the containers with bottom clearance, said second carousel (4) being associated with at least one inspection device (20) which operates using the dark field method for the detection of light-scattering foreign bodies in the liquid, **characterized in that** the two carousels (3, 4) are disposed alongside one another with their pitch circles in contact with one another in such a way that the containers (F) can be transferred from the first carousel (3) directly to the second carousel (4).

2. An apparatus according to Claim 1, **characterized in that** disposed upstream of the first carousel (3), as seen in direction of transport, is a star wheel (2) which transports the containers with bottom clearance, said star wheel (2) being associated with at least one device (10) for blow-cleaning the bottoms of the containers, and/or one inspection station (11) which operates using the bright field method for inspecting the bottoms of said containers.

3. An apparatus according to Claim 1 or 2, **characterized in that** disposed upstream of the star wheel (2) and/or first carousel (3) is an intake inspection unit (9) for checking the levels of the filled containers and/or for checking the container seals.

4. An apparatus according to Claim 3, **characterized in that** unsealed containers are neither taken up by the star wheel (2) nor by the first carousel (3).

5. An apparatus according to at least one of Claims 1 to 4, **characterized in that**, over part of the circle, the first carousel (3) has a plurality of drivable rotary tables (12) which can be brought non-positively into or out of engagement via controllable magnetic couplings (23, 27) with a driving element (14, 15) which is common to all the rotary tables.

6. An apparatus according to Claim 5, **characterized in that** the magnetic couplings (23, 27) are torque-variable hysteresis couplings.

7. An apparatus according to at least one of the preceding Claims 1 to 6, **characterized in that**, at least in some sections, equidistant luminescent screens (18, 19) are provided on both sides of the circular path of the second carousel (4), said luminescent screens (18, 19) lying diametrically opposite one another and being adapted to the curve of the path and being provided for the purpose of simultaneously illuminating the containers (F) from the sides when the bottoms of the containers are being photographed.

8. An apparatus according to Claim 7, **characterized in that** the luminescent screens (18, 19) are fitted with pulse-controllable LEDs which are always simultaneously activated when the bottoms of the containers are being photographed.

## Revendications

1. Dispositif permettant d'inspecter des récipients fermés et remplis, composé d'un carrousel (3) avec des éléments d'entraînement (14, 15) pour faire tourner les récipients autour de leur axe longitudinal, dans lequel les récipients à inspecter (F) peuvent être mis en rotation autour de leur axe longitudinal pour faire tourner la charge de matière des récipients suffisamment rapidement et centrifuger des corps étrangers éventuellement présents à partir du fond des récipients, et avec un deuxième carrousel (4) suivant dans le sens de transport pour un transport des récipients avec fond libre, auquel est associé au moins un dispositif d'inspection (20) opérant selon un procédé à champ noir pour la reconnaissance de corps étrangers dispersant la lumière dans la charge de matière,
**caractérisé en ce que**
les deux carrousels (3, 4) sont disposés l'un à côté de l'autre avec leurs cercles primitifs tangents, de telle manière que les récipients (F) puissent être transférés directement du premier carrousel (3) au deuxième carrousel (4).

2. Dispositif selon la revendication 1,
**caractérisé en ce qu'**
une roue étoile (2) transportant des récipients avec fond libre est disposée avant le premier carrousel (3), vue dans le sens de transport, à laquelle est associé au moins un dispositif de soufflage de fond (10) et/ ou un poste de contrôle de fond (11) opérant selon un procédé à champ clair.

3. Dispositif selon la revendication 1 ou 2,
**caractérisé en ce qu'**
un contrôle d'entrée (9) pour vérifier les niveaux de remplissage et/ou les fermetures de récipients est disposé avant la roue étoile (2) et/ou avant le premier carrousel (3).

4. Dispositif selon la revendication 3,
**caractérisé en ce que**
des récipients non fermés ne sont repris ni par la roue étoile (2) ni par le premier carrousel (3).

5. Dispositif selon au moins une des revendications 1 à 4,
**caractérisé en ce que**
le premier carrousel (3) présente sur un cercle primitif plusieurs plateaux tournants pouvant être entraînés (12), qui peuvent être amenés en prise ou hors prise en continuité de force avec un élément d'entraînement (14, 15) commun pour tous les plateaux tournants, par des accouplements magnétiques (23, 27) commandés.

6. Dispositif selon la revendication 5,
**caractérisé en ce que**
les accouplements magnétiques (23, 27) sont des accouplements à couple variable à hystérésis.

7. Dispositif selon au moins une des revendications précédentes 1 à 6,
**caractérisé en ce qu'**
il comprend au moins localement, de part et d'autre de la trajectoire du deuxième carrousel (4), des écrans luminescents (18,19) diamétralement opposés l'un à l'autre, adaptés à égale distance de la courbure de la trajectoire, qui éclairent en même temps latéralement les récipients (F) pendant un enregistrement du fond.

8. Dispositif selon la revendication 7,
**caractérisé en ce que**
les écrans luminescents (18, 19) sont équipés de LED à commande pulsée, qui peuvent toujours être commandées en même temps que l'enregistrement d'un fond.
